# FASCICULE DE BREVET EUROPEEN

(11) **EP 2 831 543 B1**
(45) Date de publication et mention de la délivrance du brevet: **20.01.2016**
(21) Numéro de dépôt: 13715379.7
(22) Date de dépôt: 27.03.2013
(51) Int. Cl.: G01C 21/10, G01P 15/00, G01V 7/00, G21K 1/00

(54) **APPAREIL D'INTERFEROMETRIE ATOMIQUE DE MESURE INERTIELLE DIFFERENTIELLE**
ATOMINTERFEROMETER MIT DIFFERENTIELLER TRÄGHEITSMESSUNG
ATOM INTERFEROMETER WITH DIFFERENTIAL INERTIAL MEASUREMENT

(30) Priorité: 28.03.2012 FR 1252781
(43) Date de publication de la demande: 04.02.2015
(73) Titulaire: Office National d'Etudes et de Recherches Aérospatiales (ONERA), 91120 Palaiseau (FR)
(72) Inventeur: ZAHZAM, Nassim, F-91761 Palaiseau (FR); BIDEL, Yannick, F-91761 Palaiseau (FR); BRESSON, Alexandre, F-91761 Palaiseau (FR)
(74) Mandataire: Cabinet Plasseraud
(86) Numéro de dépôt international: PCT/FR2013/050657
(87) Numéro de publication internationale: WO 2013/144503

(56) Documents cités:
- G. LAMPORESI ET AL: "Determination of the Newtonian Gravitational Constant Using Atom Interferometry", PHYSICAL REVIEW LETTERS, vol. 100, no. 5, 1 février 2008 (2008-02-01), XP055047148, ISSN: 0031-9007, DOI: 10.1103/PhysRevLett.100.050801
- YU N ET AL: "Development of an atom-interferometer gravity gradiometer for gravity measurement from space", APPLIED PHYSICS B ; LASERS AND OPTICS, SPRINGER, BERLIN, DE, vol. 84, no. 4, 18 juillet 2006 (2006-07-18), pages 647-652, XP019424639, ISSN: 1432-0649, DOI: 10.1007/S00340-006-2376-X
- STEFAN SCHMID ET AL: "Long distance transport of ultracold atoms using a 1D optical lattice", NEW JOURNAL OF PHYSICS, INSTITUTE OF PHYSICS PUBLISHING, BRISTOL, GB, vol. 8, no. 8, 1 août 2006 (2006-08-01), pages 159-159, XP020107805, ISSN: 1367-2630, DOI: 10.1088/1367-2630/8/8/159

## Description

La présente invention concerne un appareil de mesure inertielle différentielle par interférométrie atomique.

Il est connu de réaliser des mesures d'accélération ou des mesures du champ de pesanteur par interférométrie atomique. Pour cela, des atomes refroidis sont fournis par une source d'atomes, puis sont soumis à une mesure d'accélération en utilisant un système d'interférométrie atomique. Le résultat de la mesure est obtenu à partir d'une détection de la répartition des atomes entre des états atomiques différents. Ce résultat de mesure d'accélération ou de pesanteur est lié à l'endroit où la mesure est effectuée, c'est-à-dire à l'endroit où se trouvent les atomes au moment de la mesure par interférométrie atomique.

Il est aussi connu de réaliser des mesures différentielle d'accélération ou de pesanteur, pour déterminer des variations spatiales de la répartition de ces champs. Pour cela, deux mesures distinctes sont effectuées simultanément à des endroits distants, où sont produites séparément des interférences atomiques. La précision qui est obtenue pour la valeur du gradient d'accélération ou du gradient de pesanteur dépend de la précision des deux mesures d'accélération elles-mêmes, mais aussi de la précision avec laquelle est connue la distance de séparation entre ces endroits de mesure. En particulier, cette précision est améliorée lorsque la distance de séparation est augmentée entre les deux endroits où sont effectuées les mesures simultanées d'accélération.

En outre, il existe un besoin d'appareils capables de mesurer des variations spatiales d'accélération ou de pesanteur, appelés gradiomètres, qui soient compacts et peu onéreux, tout en fournissant des résultats de mesure de gradients avec une précision aussi élevée que possible.

L'article intitulé «Sensitive absolute-gravity gradiometry using atom interferometry», de J.M. McGuirk et al., Physical Review A, vol. 65, 033608 (2002), décrit un gradiomètre qui est constitué de deux sources distinctes d'atomes froids, qui sont agencées pour alimenter séparément en atomes des systèmes séparés d'interférométrie atomique. Chaque source d'atomes est dédiée individuellement à l'un des systèmes d'interférométrie atomique. De cette façon, les systèmes d'interférométrie peuvent être écartés l'un de l'autre avec une distance de séparation importante, par exemple de l'ordre de 1 m (mètre), si bien que la distance entre les endroits des mesures d'accélération qui sont réalisées simultanément est connue avec une précision relative élevée. Mais une telle conception de gradiomètre est complexe et onéreuse, car elle comporte deux sources indépendantes d'atomes froids.

Un autre inconvénient d'un tel système à deux sources d'atomes qui sont distinctes résulte de l'existence possible d'une différence entre des vitesses initiales des atomes qui sont produits respectivement par les deux sources. Une telle différence peut résulter notamment d'un écart entre les intensités des faisceaux laser qui sont utilisés pour refroidir les atomes séparément dans chacune des sources. Or il est difficile de contrôler précisément l'une par rapport à l'autre les deux intensités des faisceaux laser de refroidissement. Cette différence entre les vitesses initiales provoque alors un biais dans la différence entre les résultats des mesures d'accélération qui sont obtenus pour chaque ensemble d'atomes. En outre, ce biais peut fluctuer dans le temps, à cause d'une dérive possible des intensités des faisceaux laser de refroidissement.

L'article qui est intitulé «102 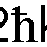 k large area atom interferometers», de S. Chiow et al., Physical Review Letters, vol. 107, 130403 (2011), décrit comment réaliser simultanément deux mesures d'accélération en utilisant deux interféromètres atomiques différents, mais qui sont alimentés en atomes à partir d'une même source d'atomes froids. De cette façon, le biais qui pourrait être provoqué par une différence entre les vitesses initiales d'atomes qui sont issus de sources séparées est supprimé. Pour cela, dans le système de S. Chiow, un même amas initial d'atomes qui est fourni par la source est séparé en deux ensembles distincts, en transférant une impulsion cinétique à certains atomes par plusieurs séquences d'absorption et d'émission multiphotoniques de Bragg. La précision avec laquelle le gradient d'accélération peut être calculé est alors limitée par la faible distance de séparation entre les deux endroits où l'accélération est mesurée. En effet, cette distance de séparation est au maximum de l'ordre de 600 µm (micromètre).

L'article de Yu et al., qui est intitulé «Development of an atom-interferometer gravity gradiometer for gravity measurement from space», Applied Physics B, Lasers and Optics, Springer, Berlin, DE, vol. 84, n° 4, 18 juilet 2006, pages 647-652, concerne un autre gradiomètre atomique qui est constitué de deux accéléromètres chacun avec une configuration de fontaine d'atomes. Un tel dispositif comporte deux systèmes séparés de sources d'atomes d'où proviennent respectivement les ensembles d'atomes sur lesquels des mesures sont réalisées simultanément.

L'article de Lamporesi et al., qui est intitulé «Determination of the Newtonian Gravitational Constant Using Atom Interferometry», Physical Review Letters, vol. 100, n°5, 1er février 2008, 050801, décrit un gradiomètre qui ne comporte qu'une seule source d'atomes, mais dans lequel deux ensembles d'atomes sont placés aux endroits des mesures par une séquence de lancers et rattrapage de ces ensembles d'atomes. Les deux ensembles d'atomes sur lesquels sont réalisées les mesures simultanées sont ainsi produits successivement par la source d'atomes. Ils peuvent alors encore présenter un écart entre leurs vitesses initiales, produisant un biais de mesure dans les résultats d'accélération différentielle qui sont obtenus en utilisant un tel gradiomètre.

Enfin, l'article de Schmid et al., qui est intitulé «Long distance transport of ultracold atoms using a 1 D optical lattice», New Journal of Physics, vol. 8, n°8, 1er août 2006, pages 156-159, concerne le principe théorique des systèmes de transport d'atomes par réseaux optiques.

Dans ces conditions, un premier but de l'invention consiste à fournir une nouvelle configuration de gradiomètre, qui permette à l'appareil d'être compact, plus simple, et avec un prix de revient inférieur.

Un second but de l'invention consiste à fournir un gradiomètre capable de fournir des valeurs de gradients d'accélération ou de pesanteur avec une précision élevée. En particulier, l'invention a pour but de réduire ou supprimer le biais qui peut affecter le résultat de la différence entre les accélérations qui sont mesurées simultanément, et qui résulte d'un écart potentiel entre les vitesses initiales des atomes qui sont utilisés pour chacune des mesures.

Pour cela, l'invention propose un appareil de mesure inertielle différentielle, ou gradiomètre, qui comprend :
- un système de source d'atomes, qui est agencé pour fournir des atomes pour des mesures d'accélération ; et
- au moins un système d'interférométrie atomique et de détection, agencé pour fournir des résultats de mesures d'accélération qui sont réalisées simultanément pour plusieurs ensembles distincts d'atomes lorsque ces ensembles d'atomes sont situés dans des zones de mesure respectives qui sont distantes les unes des autres.

Chaque résultat de mesure d'accélération est associé à une position de la zone de mesure pour l'ensemble d'atomes qui a été utilisé pour cette mesure d'accélération, afin d'obtenir un résultat de mesure inertielle différentielle.

Selon une première caractéristique de l'invention, le système de source d'atomes est adapté pour produire un amas d'atomes qui est destiné à être divisé en plusieurs ensembles d'atomes.

Selon une seconde caractéristique de l'invention, l'appareil comprend en outre :
- au moins un système de transport d'atomes, qui est agencé pour déplacer au moins un des ensembles d'atomes, après division de l'amas d'atomes, pour que les ensembles d'atomes soient situés chacun dans la zone de mesure correspondante après un fonctionnement du système de transport d'atomes.

Ainsi les atomes qui sont utilisés pour deux des mesures d'accélération qui sont réalisées simultanément dans les zones de mesure distantes proviennent du même amas d'atomes, et forment les deux ensembles d'atomes distincts qui sont situés dans les zones de mesure correspondantes.

Dans le cadre de la présente invention, on entend par système de transport d'atomes un moyen de déplacement d'atomes qui permet de capturer des atomes dans une position initiale de ceux-ci, puis de les relâcher ultérieurement dans une position finale. Pour cela, le système de transport d'atomes produit une accélération des atomes à partir de leur position initiale, peut maintenir les atomes avec une vitesse déterminée pendant une durée qui est aussi contrôlée, puis ralentit les atomes pour les placer dans la position finale. Le plus souvent, mais sans que cela soit indispensable, les atomes peuvent avoir une vitesse nulle, ou très faible, dans leur position initiale et/ou dans leur position finale, au début et/ou à la fin de l'utilisation du système de transport atomique.

Grâce à l'utilisation d'un tel système de transport atomique, les atomes qui sont utilisés pour effectuer les mesures simultanées d'accélération à des endroits séparés, peuvent être fournis par la même source d'atomes froids. De cette façon, l'appareil de l'invention peut ne comporter qu'une seule source d'atomes, ce qui simplifie sa conception, augmente sa compacité et réduit son coût.

En outre, grâce au fait que les ensembles d'atomes qui sont utilisés pour des mesures simultanées d'accélération, proviennent du même amas initial, l'écart est nul entre les vitesses initiales respectives des atomes qui appartiennent à des ensembles distincts. Ainsi, le biais de mesure de différence d'accélération qui pourrait résulter d'un tel écart de vitesses initiales, est supprimé par l'invention.

De plus, le système de transport d'atomes peut être adapté pour transporter l'un au moins des ensembles d'atomes avec une longueur de trajet qui est importante, par exemple de plusieurs dizaines de centimètres, voire plus de 1 mètre. Cette longueur est connue avec précision d'après le contrôle du système de transport atomique, si bien que le gradient d'accélération ou de pesanteur peut être calculé avec précision à partir des résultats des mesures d'accélération qui sont obtenus pour les différents ensembles d'atomes.

Selon l'invention, chaque système de transport d'atomes peut être adapté pour produire des réseaux optiques qui sont aptes chacun à piéger l'un des ensembles d'atomes, de façon à imposer continûment une position à cet ensemble d'atomes pendant une durée de fonctionnement du système de transport. En effet, un réseau optique est constitué de deux ondes électromagnétiques progressives et monochromatiques, de type laser, qui sont superposées et se propagent dans des sens opposés. Le déplacement des atomes est alors contrôlé en ajustant un écart entre les fréquences respectives des deux ondes progressives. Or les techniques qui sont actuellement disponibles pour varier et contrôler la fréquence d'une onde monochromatique permettent de contrôler très précisément et simplement la position des atomes qui sont transportés.

Dans des modes différents de réalisation de l'invention, l'appareil peut avoir une configuration telle que :
- l'un des réseaux optiques soit fixe pour maintenir à un endroit fixe l'un des ensembles d'atomes, et un autre des réseaux optiques soit mobile pour déplacer un autre des ensembles d'atomes entre des positions initiale et finale déterminées ; ou
- les deux réseaux optiques sont mobiles, et agencés chacun pour déplacer un des ensembles d'atomes entre des positions initiale et finale déterminées. Dans ce cas, les deux réseaux optiques mobiles peuvent avantageusement être adaptés pour déplacer chacun un des ensembles d'atomes selon des sens de déplacement qui sont opposés le long d'une direction commune.

Dans des perfectionnements de l'invention, l'appareil de mesure inertielle différentielle peut comprendre un ensemble de source laser qui est adapté pour produire un faisceau laser sur un trajet de faisceau constant, et une unité de contrôle qui est adaptée pour contrôler successivement l'ensemble de source laser selon des modes de fonctionnement différents. Ces modes peuvent comprendre :
- un premier mode de fonctionnement, dans lequel l'ensemble de source laser forme au moins l'un des réseaux optiques, ce réseau optique étant adapté pour déplacer l'un des ensembles d'atomes ou le maintenir dans une position fixe ; et
- un second mode de fonctionnement, dans lequel l'ensemble de source laser forme une source Raman qui est adaptée pour provoquer une séquence d'interactions successives à deux photons avec les atomes, afin de produire une interférence d'onde atomique ;

- optionnellement un troisième mode de fonctionnement, dans lequel l'ensemble de source laser contribue à former un piège magnéto-optique du système de source d'atomes, adapté pour refroidir les atomes, et
- optionnellement un quatrième mode de fonctionnement, dans lequel l'ensemble de source laser produit une impulsion séparatrice qui est adaptée pour former les ensembles distincts d'atomes en divisant un même amas initial d'atomes fourni par le système de source d'atomes.

Enfin, l'invention propose aussi un procédé de mesure d'un gradient d'accélération ou de pesanteur, qui est mis en oeuvre en utilisant un appareil de mesure inertielle différentielle tel que décrit précédemment.

D'autres particularités et avantages de la présente invention apparaîtront dans la description ci-après d'exemples de réalisation non limitatifs, en référence aux dessins annexés, dans lesquels :
- la figure 1 est diagramme synoptique des étapes d'une mesure inertielle différentielle qui est effectuée en utilisant un appareil conforme à l'invention ;
- la figure 2 représente schématiquement une configuration possible d'un appareil de mesure inertielle différentielle qui est conforme à l'invention ; et
- les figures 3a et 3b illustrent respectivement deux constitutions possibles pour un ensemble de source laser, pouvant être utilisées dans un appareil de mesure inertielle différentielle selon l'invention.

Pour raison de clarté, les dimensions des éléments qui sont représentés dans ces figures ne correspondent ni à des dimensions réelles ni à des rapports de dimensions réels. En outre, des références identiques qui sont indiquées dans des figures différentes désignent des éléments identiques ou qui ont des fonctions identiques.

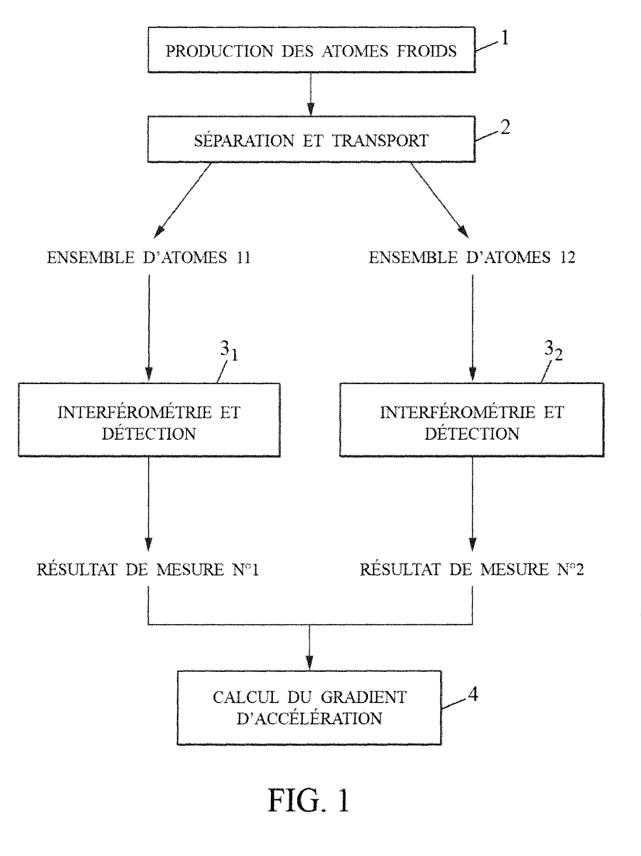

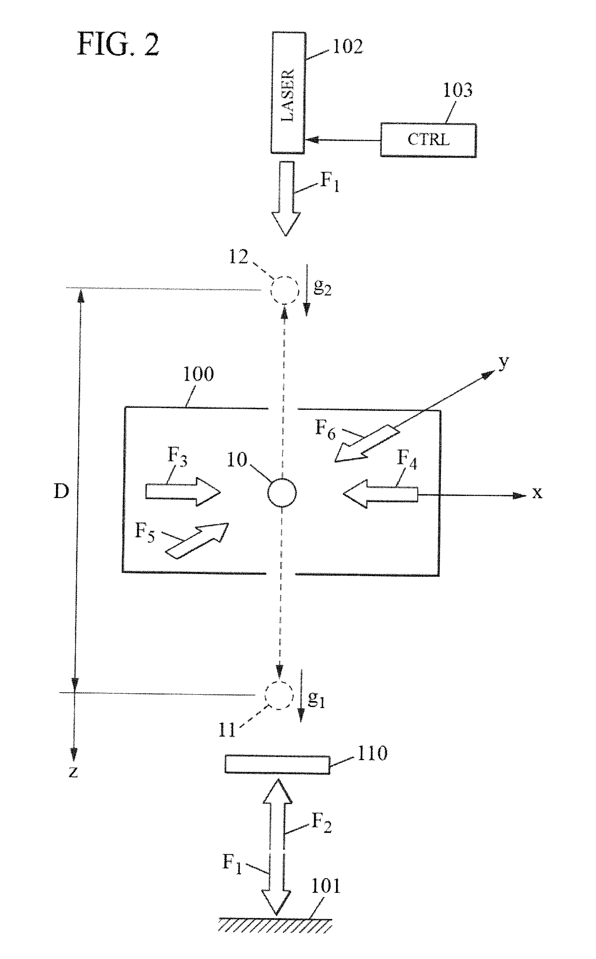

En référence aux figures 1 et 2, une source unique 100 est utilisée pour produire un amas d'atomes froids 10 qui est destiné à être divisé en plusieurs ensembles d'atomes, ceux-ci devant être amenés à des endroits qui sont séparés spatialement pour effectuer simultanément des mesures d'accélération en chacun de ces endroits. L'étape de production de l'amas d'atomes 10 est référencée 1 sur la figure 1. A titre d'illustration et de simplification, mais d'une façon qui n'est pas limitative, la présente description est limitée dans la suite au cas où deux ensembles d'atomes 11 et 12 sont produits par la division de l'amas 10, pour effectuer simultanément deux mesures d'accélération et en déduire une valeur de gradient d'accélération. Ce gradient d'accélération peut être un gradient de pesanteur lorsque les atomes sont soumis au champ de pesanteur.

La source 100 a pour fonction de piéger les atomes de l'amas 10 et de les refroidir jusqu'à une température déterminée. Elle peut avoir l'une des structures connues de l'Homme du métier, telle qu'un piège magnéto-optique. Un tel piège comprend une paire de bobines (non représentées) en configuration anti-Helmholtz, qui sont alimentées en courant électrique pendant une première phase de fonctionnement du piège pour créer un gradient de champ magnétique à l'endroit auquel l'amas 10 est maintenu. Trois paires de faisceaux laser se croisent à cet endroit, en se propageant dans des sens opposés pour deux faisceaux d'une même paire. Ainsi, les faisceaux F₁ et F₂ se propagent en sens opposés selon l'axe z, les faisceaux F₃ et F₄ selon l'axe x et les faisceaux F₅ et F₆ selon l'axe y. Différentes méthodes de formation des faisceaux F₁-F₆, notamment en utilisant des miroirs de renvoi pour réduire le nombre de sources laser qui sont nécessaires, sont connues si bien qu'il n'est pas nécessaire de les répéter. Dans une seconde phase de fonctionnement du piège magnéto-optique, le gradient de champ magnétique est supprimé et les fréquences de rayonnement des faisceaux laser sont désaccordées pour obtenir un nuage d'atomes froids, appelé mélasse, qui possède une température sub-Doppler.

Les atomes de l'amas 10 sont alors chargés dans un système de transport d'atomes qui les amène par ensembles séparés aux endroits des mesures d'accélération. Le système de transport atomique peut être constitué de plusieurs réseaux optiques qui sont créés à l'endroit initial de l'amas d'atomes 10 et peuvent se prolonger au moins jusqu'aux endroits des mesures d'accélération.

De façon connue, un réseau optique peut être constitué par deux ondes laser qui ont des intensités de rayonnement sensiblement égales, sont superposées et se propagent en sens opposés, telles que les faisceaux F₁ et F₂ sur la figure 2. Lorsque les fréquences de rayonnement des faisceaux laser F₁ et F₂ sont égales, ils forment une onde stationnaire selon l'axe z, qui est constituée d'une alternance de noeuds et de ventres de champ électrique. De façon connue, chaque ventre ou chaque noeud de champ électrique forme un puits de potentiel pour les atomes, qui est capable de les confiner spatialement, autrement dit de les piéger. Le réseau est alors un réseau optique fixe. Lorsque l'un des deux faisceaux laser possède une fréquence un peu différente de celle de l'autre, la structure d'onde stationnaire se déplace selon l'axe z, dans un sens constant si l'écart de fréquence possède lui-même un signe constant. Les puits de potentiels qui contiennent des atomes entraînent alors ceux-ci conformément au déplacement du réseau optique, d'une façon qui est contrôlée par l'écart entre les fréquences de rayonnement des deux faisceaux laser. Le réseau optique qui est ainsi obtenu est mobile, et est couramment appelé ascenseur optique.

Afin que les atomes qui sont situés initialement à l'emplacement d'un puits de potentiel du réseau optique ne sortent pas de ce puits, il peut être avantageux de réduire encore la vitesse initiale des atomes de l'amas 10 pour que leur échappement hors du réseau optique ne soit plus possible. Pour cela, une phase de refroidissement supplémentaire, dite de refroidissement sub-recul, peut être effectuée. Un tel refroidissement sub-recul des atomes peut être effectué en utilisant par exemple la technique de refroidissement Raman qui est décrite dans l'article intitulé «Laser cooling below a photon recoil with three-level atom», de M. Kasevich et al., Physical Review Letters, vol. 69, pp. 1741-1744 (1992), ou la technique de refroidissement par bandes latérales qui est décrite dans l'article intitulé «Degenerate Raman sideband cooling of trapped cesium atoms at very high atominc densities», de V. Vuletić et al., Physical Review Letters, vol. 81, pp. 5768-5771 (1998). Alternativement, les atomes peuvent être sélectionnés en fonction de leur vitesse, par exemple en utilisant une impulsion Raman. Une telle méthode de sélection est décrite dans l'article intitulé «Atomic velocity selection using stimulated Raman transitions», de M. Kasevich et al., Physical Review Letters, vol. 66, pp. 2297-2300 (1991). Cette méthode peut être mise en oeuvre en utilisant un ensemble de source laser modulée pour les faisceaux F₁ et F₂ tel que décrit plus loin, le faisceau F₂ étant obtenu par rétro-réflexion du faisceau F₁ sur le miroir de renvoi 101 (figure 2). Les atomes qui ne sont pas sélectionnés par l'impulsion Raman sont alors éjectés par un faisceau laser qui est accordé pour être en résonance avec une transition atomique quasi-fermée. Toutefois, un tel refroidissement des atomes ou une telle sélection en fonction de leur vitesse n'est pas indispensable, et les réseaux optiques peuvent être allumés directement après l'obtention de la mélasse optique. Les atomes qui ne sont pas piégés dans la bande fondamentale des réseaux optiques seront perdus spontanément, lors des phases d'accélération ou de décélération des réseaux optiques.

Plusieurs combinaisons de réseaux optiques peuvent être utilisées alternativement, pour laisser deux ensembles d'atomes 11 et 12 respectivement dans des positions finales qui sont séparées l'une de l'autre et connues avec précision. En effet, en fonction de la commande de chaque réseau optique au moyen des fréquences de rayonnement des faisceaux laser qui le composent, la distance sur laquelle les atomes sont transportés par le réseau optique est connue précisément. Parmi les combinaisons possibles, on peut citer :
- un réseau optique qui est fixe pour maintenir l'un des ensembles d'atomes à l'emplacement de l'amas initial 10, et un autre réseau optique qui est mobile pour déplacer l'autre ensemble d'atomes à partir de l'emplacement de l'amas initial 10 jusqu'à une position finale où, ou à proximité de laquelle, l'accélération sera mesurée ; et
- deux réseaux optiques mobiles, par exemple l'un pour déplacer l'ensemble d'atomes 11 dans le sens de l'axe z, et l'autre pour déplacer l'ensemble d'atomes 12 dans le sens opposé.

De tels réseaux optiques peuvent être produits de multiples façons.

Selon une première façon, l'appareil peut comprendre, pour l'un au moins des réseaux optiques, deux sources laser qui sont agencées pour produire respectivement les deux faisceaux laser qui sont superposés et se propagent dans des sens opposés. Une unité de contrôle est alors adaptée pour varier les fréquences de rayonnement respectives des sources laser, de façon à contrôler un déplacement du réseau optique.

La seconde façon qui est décrite maintenant procure une configuration d'appareil qui est simplifiée. Comme représenté sur la figure 2, l'appareil peut comprendre un ensemble de source laser 102 et encore le miroir 101, qui sont agencés de sorte que le faisceau laser qui est produit par l'ensemble de source laser 102 soit réfléchi par le miroir 101 pour former un faisceau incident et un faisceau réfléchi. F₁ et F₂ désignent donc encore les faisceaux incident et réfléchi qui sont superposés et se propagent dans les sens opposés. Une unité de contrôle 103, notée CTRL, est alors agencée pour varier des fréquences de rayonnement respectives de composantes du faisceau laser, une de ces composantes dans le faisceau incident F₁ formant l'un des réseaux optiques avec une des composantes dans le faisceau réfléchi F₂.

Pour varier les fréquences de rayonnement des composantes du faisceau laser, l'ensemble de source laser 102 peut inclure l'un des systèmes de modulation suivants :
- un modulateur d'intensité de rayonnement ; ou
- un modulateur acousto-optique qui est agencé pour recevoir un signal acoustique, et adapté pour moduler une fréquence d'un rayonnement optique qui traverse ce modulateur en fonction du signal acoustique.

Le système de modulation utilisé est disposé pour moduler le faisceau laser avant de former les faisceaux incident F₁ et réfléchi F₂ des réseaux optiques.

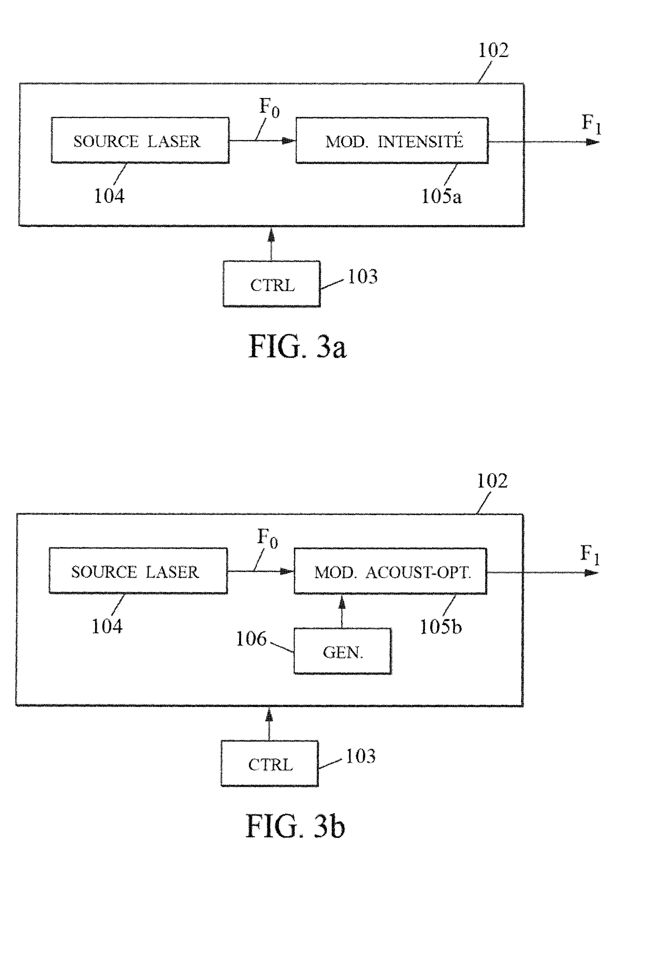

La figure 3a illustre la structure de l'ensemble de source laser 102 lorsqu'un modulateur d'intensité de rayonnement est utilisé. L'ensemble 102 comprend alors une source laser 104 qui produit un faisceau laser initial F₀, dont la fréquence de rayonnement est f₀. Le modulateur d'intensité 105a, noté MOD. INTENSITE, reçoit en entrée le faisceau initial F₀ et produit en sortie le faisceau F₁ qui est modulé. Lorsque la modulation est commandée par l'unité de contrôle 103 selon une fréquence de modulation f₁, le faisceau F₁ possède principalement trois composantes dont les fréquences respectives de rayonnement sont f₀, f₀+f₁ et f₀-f₁. En utilisant le miroir 101 pour former le faisceau réfléchi F₂, deux réseaux optiques mobiles dans le même sens parallèlement à l'axe z résultent de l'interférence entre la composante de fréquence f₀ dans le faisceau F₁ et la composante de fréquence f₀+f₁ dans de faisceau F₂, et entre la composante de fréquence f₀-f₁ dans le faisceau F₁ et la composante de fréquence f₀ dans de faisceau F₂, et deux autres réseaux optiques mobiles dans le sens opposé résultent de l'interférence entre la composante de fréquence f₀+f₁ dans le faisceau F₁ et la composante de fréquence f₀ dans de faisceau F₂, et entre la composante de fréquence f₀ dans le faisceau F₁ et la composante de fréquence f₀-f₁ dans de faisceau F₂. Ces deux réseaux optiques se déplacent simultanément avec des vitesses absolues de déplacement qui sont égales.

La figure 3b correspond à la figure 3a lorsqu'un modulateur acousto-optique est utilisé. L'ensemble 102 comprend encore la source laser 104, le modulateur acousto-optique 105b, noté MOD. ACOUSTO-OPT., et un générateur de modulation 106, noté GEN. Le générateur de modulation 106 transmet un signal de modulation sur une entrée de signal acoustique du modulateur 105b. Le signal de modulation peut être composé de deux ondes RF de fréquences respectives qui sont différentes, de sorte que les réseaux mobiles qui sont créés peuvent se déplacer à des vitesses qui sont elles-mêmes différentes l'une de l'autre.

Un ou plusieurs réseaux optiques fixes sont produits simultanément à cause de l'utilisation du miroir 101, en superposition avec les réseaux optiques mobiles qui sont voulus. Des atomes de l'amas initial 10 peuvent alors être perdus à cause de ces réseaux involontaires, sans qu'une telle perte n'ait de conséquence pour le fonctionnement de chaque mesure d'accélération. Toutefois, le perfectionnement suivant du système de transport atomique permet d'éviter une telle perte d'atomes. Selon ce perfectionnement, l'ensemble de source laser 102 peut être adapté pour produire deux composantes monochromatiques du faisceau laser avec des fréquences de rayonnement respectives qui sont différentes, et avec des directions respectives de polarisation linéaire qui sont perpendiculaires entre elles dans le faisceau incident F₁. Par exemple, la première composante possède la fréquence de rayonnement v et une polarisation linéaire qui est parallèle à l'axe x dans le faisceau incident F₁, et la seconde composante possède la fréquence de rayonnement v+Δv et une polarisation linéaire qui est parallèle à l'axe y aussi dans le faisceau incident F₁. L'appareil comprend alors en outre une lame quart-d'onde 110 qui est disposée devant le miroir 101, et qui est efficace pour les deux composantes du faisceau laser dans faisceaux incident F₁ et réfléchi F₂. Grâce aux transformations de polarisation qui sont produites par la lame quart d'onde 110, le champ d'ondes dans lequel se trouve l'amas d'atomes 10 ne comprend qu'un premier réseau optique qui est polarisé selon l'axe x et un second réseau optique qui est polarisé selon l'axe y. Les deux réseaux optiques ont des vitesses instantanées de déplacement qui sont égales, dirigées en sens opposés parallèlement à l'axe z, et contrôlées par l'écart de fréquence Δv.

Plusieurs méthodes peuvent être utilisées pour diviser en deux l'amas initial d'atomes 10, puis pour transporter les deux ensembles d'atomes 11 et 12 qui sont ainsi créés jusque dans leurs positions finales de mesure d'accélération. Parmi ces méthodes, on peut citer de façon non limitative :
- à partir de la position initiale de l'amas 10 tel qu'il est produit par le piège magnéto-optique 100, les atomes peuvent d'abord être maintenus en place par un réseau optique fixe s'ils sont produits avec une vitesse initiale qui est nulle. Si cette vitesse initiale n'est pas nulle, ils peuvent être préalablement décélérés optiquement. Ensuite, deux réseaux optiques mobiles peuvent être générés comme décrit précédemment, pour accélérer puis ralentir les ensembles atomes 11 et 12 dans les deux sens opposés le long d'une direction commune, de façon à les amener dans les positions finales de mesure d'accélération ;
- la division de l'amas 10 pour former les deux ensembles d'atomes 11 et 12 peut être réalisée en utilisant une séquence optique séparatrice à deux impulsions Raman simultanées qui ont des vecteurs d'onde effectifs opposés. Une telle séquence séparatrice est décrite par exemple dans l'article intitulé «Enhancing the area of a Raman atom interferometer using a versatile double-diffraction technique», de T. Lévèque et al., Physical Review Letters, vol. 103, 080405 (2009). Les deux ensembles d'atomes 11 et 12 qui ont alors des impulsions opposées sont ensuite chargés dans deux réseaux mobiles qui se déplacent dans des sens opposés ;
- la division de l'amas 10 peut aussi être réalisée en refroidissant d'abord les atomes ou en en sélectionnant une partie en fonction de leur vitesse, puis en utilisant une impulsion de Bragg en tant que séquence optique séparatrice, pour diviser l'amas 10 en les deux ensembles d'atomes 11 et 12. L'impulsion de Bragg est constituée par un réseau optique pulsé qui interagit avec certains des atomes sans provoquer de transition électronique pour ceux-ci, contrairement à une séquence séparatrice à impulsion Raman. Deux réseaux optiques sont ensuite produits : l'un pour transporter les atomes qui ont interagi avec l'impulsion de Bragg, et l'autre pour les atomes qui n'ont pas subi cette interaction. Une telle méthode est décrite par exemple dans l'article intitulé «A Bose-Einstein condensate in an optical lattice», de Hecker Denschlag et al., Journal of Physics B, vol. 35, 3095 (2002) ; ou
- plus simplement, la séquence séparatrice peut être une impulsion laser Raman unique, et ceux des atomes qui ont subi la transition Raman sont chargés dans un réseau optique mobile, alors que ceux qui n'ont pas subi la transition Raman sont piégés dans un réseau optique fixe.

Sur la figure 1, l'étape de séparation et de transport des ensembles d'atomes 11 et 12 est référencée 2. A l'issue de cette étape, les ensembles d'atomes 11 et 12 sont situés à des emplacements dans l'appareil qui sont connus avec précision. Sur la figure 2, les deux emplacements sont distants l'un de l'autre de la distance de séparation D.

Les mesures interférométriques d'accélération 3₁ et 3₂ sont alors effectuées simultanément pour les deux ensembles d'atomes 11 et 12, aux emplacements dans lesquels ceux-ci se trouvent à l'issue de l'étape de séparation et de transport 2. Chacun des deux interféromètres met en oeuvre une séquence d'impulsions Raman stimulées entre les deux états fondamentaux hyperfins des atomes de l'ensemble 11 ou 12 correspondant. Plusieurs séquences d'impulsions Raman peuvent être utilisées alternativement, dont celle qui est décrite dans l'article intitulé «Atomic interferometry using stimulated Raman transitions», de M. Kasevitch et al., Physical Review Letters, vol. 67, pp.181-184 (1991) et qui est rappelée maintenant :
- une première impulsion Raman, dite impulsion π/2 et ayant une fonction de séparatrice ;
- une seconde impulsion Raman, dite π et ayant une fonction de miroir atomique ; puis
- une troisième impulsion Raman, encore π/2 et ayant une fonction de recombinaison des paquets d'onde atomique.

Avantageusement, un seul faisceau Raman peut être utilisé pour effectuer les mesures d'accélération sur les deux ensembles d'atomes 11 et 12, afin de supprimer efficacement les bruits de mesure qui pourraient affecter différemment les deux mesures interférométriques.

Chaque mesure interférométrique procède alors par détection de la proportion des atomes de l'ensemble correspondant qui se trouvent dans l'un des deux états hyperfins fondamentaux. Plusieurs techniques différentes sont connues de l'Homme du métier pour réaliser une telle détection. Par exemple, ce peut être une mesure d'absorption lumineuse, avec des impulsions dont la longueur d'onde est sélectionnée pour provoquer une absorption à partir d'un seul des états atomiques hyperfins.

Des résultats des mesures d'accélération notés g₁ et g₂ sont ainsi obtenus respectivement pour les deux ensembles d'atomes 11 et 12, et le gradient d'accélération peut être calculé à l'étape 4 en divisant la différence de ces résultats par la distance de séparation D : (g₁-g₂)/D.

Selon une configuration préférée d'un appareil selon l'invention, le même ensemble de source laser 102 peut être utilisé à plusieurs reprises pour des fonctions différentes, qui sont mises en oeuvre successivement dans l'appareil de mesure inertielle différentielle. Les fonctions concernées peuvent être :
- le refroidissement des atomes de l'amas initial 10 à l'étape 1 ;
- la division de l'amas 10 pour former les ensembles d'atomes 11 et 12, au début de l'étape 2 ;
- la production des réseaux optiques pour le transport des ensembles séparés d'atomes 11 et 12, à l'étape 2 ; et
- la production des impulsions Raman pour créer les interférences d'onde atomique, pour les deux ensembles d'atomes 11 et 12 respectivement aux étapes 3₁ et 3₂.

En particulier, la configuration d'appareil qui est décrite dans l'article «A cold atom pyramidal gravimeter with a single laser beam», de Q. Bodart et al., Applied Physical Letters, vol. 96, 134101 (2010), peut être reprise. Le piège magnéto-optique et l'interféromètre atomique sont réalisés en utilisant un ensemble unique de source laser, ce qui procure une structure d'appareil qui est simplifiée et très compacte. Pour obtenir un gradiomètre qui est conforme à la présente invention, ce même ensemble de source laser peut aussi être utilisé pour diviser l'amas initial d'atomes et produire les réseaux optiques. L'amas d'atomes froids 10 sort alors par chute libre de la zone du réflecteur pyramidal. Il est alors transféré dans un réseau mobile pour ralentir les atomes jusqu'à la vitesse nulle. Une fois arrêtés de cette façon, les atomes de l'amas 10 sont divisés pour former les deux ensembles 11 et 12 puis transportés aux emplacements des mesures d'accélération comme décrits plus haut.

Il est entendu que la présente invention peut être reproduite en modifiant certains aspects par rapport à la description détaillée qui a été fournie. En particulier, les directions selon lesquelles les atomes sont transportés, entre la sortie de la source d'atomes froids et la réalisation des mesures d'accélération par interférométrie, peuvent être changées. De même, il est aussi possible de changer l'orientation relative de la direction de séparation des ensembles d'atomes qui sont utilisés pour les mesures d'accélération, par rapport à la direction de la composante d'accélération qui est mesurée. Ainsi, l'invention peut être appliquée pour mesurer certains ou tous les termes du tenseur de gradient de pesanteur. Enfin, l'invention peut être reproduite en utilisant des systèmes de transport atomique autres que des réseaux optiques.

## Revendications

1. Appareil de mesure inertielle différentielle, comprenant :
- un système de source d'atomes (100), agencé pour fournir des atomes (10) pour des mesures d'accélération ; et
- au moins un système d'interférométrie atomique et de détection, agencé pour fournir des résultats de mesures d'accélération réalisées simultanément pour plusieurs ensembles distincts d'atomes (11, 12) lorsque les dits ensembles d'atomes sont situés dans des zones de mesure respectives distantes les unes des autres,
chaque résultat de mesure d'accélération étant associé avec une position de la zone de mesure pour l'ensemble d'atomes qui a été utilisé pour ladite mesure d'accélération, afin d'obtenir un résultat de mesure inertielle différentielle,
**caractérisé en ce que** le système de source d'atomes (100) est adapté pour produire un amas d'atomes destiné à être divisé en plusieurs ensembles d'atomes,
et **en ce que** l'appareil comprend en outre :
- au moins un système de transport d'atomes, agencé pour déplacer au moins un des ensembles d'atomes, après division de l'amas d'atomes, pour que les dits ensembles d'atomes soient situés chacun dans la zone de mesure correspondante après un fonctionnement du système de transport d'atomes,
de sorte que les atomes qui sont utilisés pour deux des mesures d'accélération réalisées simultanément dans les zones de mesure distantes proviennent du même amas d'atomes, et forment les deux ensembles d'atomes distincts qui sont situés dans les zones de mesure correspondantes,
ledit système de transport d'atomes étant adapté pour produire des réseaux optiques aptes chacun à piéger l'un des ensembles d'atomes (11, 12), de façon à imposer continûment une position audit ensemble d'atomes pendant une durée de fonctionnement du système de transport.

2. Appareil selon la revendication 1, dans lequel un des réseaux optiques est fixe pour maintenir à un endroit fixe un des ensembles d'atomes, et un autre des réseaux optiques est mobile pour déplacer un autre des ensembles d'atomes entre des positions initiale et finale déterminées.

3. Appareil selon la revendication 1, dans lequel deux des réseaux optiques sont mobiles, et agencés chacun pour déplacer un des ensembles d'atomes (11, 12) entre des positions initiale et finale déterminées

4. Appareil selon la revendication 3, dans lequel les deux réseaux optiques mobiles sont adaptés pour déplacer chacun un des ensembles d'atomes (11, 12) selon des sens de déplacement opposés le long d'une direction commune.

5. Appareil selon l'une quelconque des revendications 1 à 4. comprenant, pour l'un au moins des réseaux optiques, deux sources laser agencées pour produire respectivement deux faisceaux laser superposés et se propageant dans des sens opposés, et une unité de contrôle adaptée pour varier des fréquences de rayonnement respectives des sources laser, de façon à contrôler un déplacement dudit réseau optique.

6. Appareil selon l'une quelconque des revendications 1 à 4, comprenant un ensemble de source laser (102) et un miroir (101), agencés de sorte qu'un faisceau laser produit par l'ensemble de source laser soit réfléchi par le miroir pour former un faisceau incident (F₁) et un faisceau réfléchi (F₂) superposés et se propageant dans des sens opposés, et l'appareil comprenant en outre une unité de contrôle (103) agencée pour varier des fréquences de rayonnement respectives de composantes du faisceau laser, une des composantes dans le faisceau incident formant l'un des réseaux optiques avec une des composantes dans le faisceau réfléchi.

7. Appareil selon la revendication 6, dans lequel l'ensemble de source laser (102) inclut l'un des systèmes de modulation suivants :
- un modulateur d'intensité de rayonnement (105a) ; ou
- un modulateur acousto-optique (105b) agencé pour recevoir un signal acoustique, et pour moduler une fréquence d'un rayonnement optique traversant ledit modulateur en fonction du signal acoustique,
le système de modulation étant disposé pour moduler le faisceau laser avant de former les dits faisceaux incident (F₁) et réfléchi (F₂) des réseaux optiques.

8. Appareil selon la revendication 6 ou 7 avec la revendication 4, dans lequel l'ensemble de source laser (102) est adapté pour produire deux composantes du faisceau laser avec des fréquences de rayonnement respectives qui sont différentes,
les deux composantes de faisceau laser ayant des directions respectives de polarisation linéaire qui sont perpendiculaires entre elles dans le faisceau incident (F₁), et
l'appareil comprenant en outre une lame quart-d'onde (110) disposée devant le miroir (101), et efficace pour les deux composantes du faisceau laser dans les faisceaux incidents et réfléchis.

9. Appareil selon l'une quelconque des revendications 6 à 8 dans lequel l'ensemble de source laser (102) est adapté pour produire le faisceau laser sur un trajet de faisceau constant, et l'unité de contrôle (103) est adaptée pour contrôler successivement l'ensemble de source laser selon des modes de fonctionnement différents, dans lequel
- pour un premier mode de fonctionnement, l'ensemble de source laser forme au moins un des réseaux optiques adapté pour déplacer l'un des ensembles d'atomes (11, 12) ou maintenir l'un des ensembles d'atomes dans une position fixe ; et
- pour un second mode de fonctionnement, l'ensemble de source laser forme une source Raman adaptée pour provoquer une séquence d'interactions successives à deux photons avec les atomes, afin de produire une interférence d'onde atomique

10. Appareil selon la revendication 9, dans lequel l'unité de contrôle (103) est adaptée en outre pour contrôler l'ensemble de source laser (102) selon l'un au moins des modes supplémentaires de fonctionnement suivants :
- pour un troisième mode de fonctionnement, l'ensemble de source laser contribue à former un piège magnéto-optique du système de source d'atomes (100), adapté pour refroidir les atomes, et
- pour un quatrième mode de fonctionnement, l'ensemble de source laser produit une impulsion séparatrice adaptée pour former les ensembles distincts d'atomes (11, 12) en divisant un même amas initial (10) des dits atomes fourni par le système de source d'atomes (100)

11. Procédé de mesure d'un gradient d'accélération ou de pesanteur mis en oeuvre en utilisant un appareil selon l'une quelconque des revendications précédentes.

## Patentansprüche

1. Vorrichtung zur differentiellen Trägheitsmessung, umfassend:
- ein Atomquellensystem (100), das eingerichtet ist, um Atome (10) für Beschleunigungsmessungen bereitzustellen; und
- zumindest ein Atominterferometrie- und Erkennungssystem, das eingerichtet ist, Ergebnisse von Beschleunigungsmessungen bereitzustellen, die gleichzeitig für mehrere einzelne Atomgruppen (11, 12) durchgeführt wurden, wenn sich die Atomgruppen in jeweiligen Messbereichen befinden, die voneinander beabstandet sind,
wobei jedes Beschleunigungsmessergebnis einer Position des Messbereichs für die Atomgruppe, die für die betreffende Beschleunigungsmessung genutzt wurde, zugeordnet wird, um ein Ergebnis der differentiellen Trägheitsmessung zu erhalten, **dadurch gekennzeichnet, dass** das Atomquellensystem (100) geeignet ist, ein Atomcluster zu erzeugen, das in mehrere Atomgruppen unterteilt werden soll,
und dass die Vorrichtung ferner Folgendes umfasst:
- zumindest ein Atomtransportsystem, das eingerichtet ist, um zumindest eine der Atomgruppen nach Teilung des Atomclusters zu bewegen, damit sich die Atomgruppen jeweils nach einem Betrieb des Atomtransportsystems im entsprechenden Messbereich befinden,
sodass die Atome, die für zwei der Beschleunigungsmessungen, die gleichzeitig in den voneinander entfernten Messbereichen durchgeführt werden, genutzt werden, aus demselben Atomcluster stammen und die beiden einzelnen Atomgruppen ausbilden, die sich in den entsprechenden Messbereichen befinden,
wobei das Atomtransportsystem geeignet ist, optische Netze zu erzeugen, die jeweils in der Lage sind, eine der Atomgruppen (11, 12) zu fangen, um der Atomgruppe während einer Betriebsdauer des Transportsystems dauerhaft eine Position aufzuzwingen.

2. Vorrichtung nach Anspruch 1, wobei eines der optischen Netze feststehend ist, um eine der Atomgruppen in einer festen Stellung zu halten, und ein anderes der optischen Netze beweglich ist, um eine andere der Atomgruppen zwischen einer bestimmten Ausgangsposition und einer bestimmten Endposition zu bewegen.

3. Vorrichtung nach Anspruch 1, wobei zwei der optischen Netze beweglich und jeweils eingerichtet sind, eine der Atomgruppen (11, 12) zwischen einer bestimmten Ausgangsposition und einer bestimmten Endposition zu bewegen.

4. Vorrichtung nach Anspruch 3, wobei die beiden beweglichen optischen Netze geeignet sind, jede der Atomgruppen (11, 12) in entlang einer gemeinsamen Richtung entgegengesetzten Bewegungsrichtungen zu bewegen.

5. Vorrichtung nach einem der Ansprüche 1 bis 4, umfassend, für zumindest eines der optischen Netze, zwei Laserquellen, die eingerichtet sind, jeweils zwei einander überlagernde Laserstrahlen zu erzeugen, die sich in entgegengesetzte Richtungen ausbreiten, und eine Steuereinheit, die geeignet ist, jeweilige Strahlungsfrequenzen der Laserquellen zu variieren, um so eine Bewegung des optischen Netzes zu steuern.

6. Vorrichtung nach einem der Ansprüche 1 bis 4, umfassend eine Laserquelleneinheit (102) und einen Spiegel (101), die so eingerichtet sind, dass ein von der Laserquelleneinheit erzeugter Laserstrahl vom Spiegel reflektiert wird, um einen einfallenden Strahl (F₁) und einen reflektierten Strahl (F₂) auszubilden, die einander überlagern und sich in entgegengesetzte Richtungen ausbreiten, wobei die Vorrichtung ferner eine Steuereinheit (103) umfasst, die eingerichtet ist, jeweilige Strahlungsfrequenzen von Komponenten des Laserstrahls zu variieren, wobei eine der Komponenten im einfallenden Strahl eines der optischen Netze mit einer der Komponenten im reflektierten Strahl ausbildet.

7. Vorrichtung nach Anspruch 6, wobei die Laserquelleneinheit (102) eines der folgenden Modulationssysteme beinhaltet:
- einen Strahlungsintensitätsmodulator (105a) oder
- einen akustooptischen Modulator (105b), der eingerichtet ist, ein akustisches Signal zu empfangen und eine Frequenz einer den Modulator durchdringenden optischen Strahlung in Abhängigkeit vom akustischen Signal zu modulieren,
wobei das Modulationssystem angeordnet ist, den Laserstrahl zu modulieren, bevor der einfallende Strahl (F₁) und der reflektierte Strahl (F₂) der optischen Netze ausgebildet werden.

8. Vorrichtung nach Anspruch 6 oder 7 in Verbindung mit Anspruch 4, wobei die Laserquelleneinheit (102) geeignet ist, zwei Laserstrahlkomponenten mit jeweiligen Strahlungsfrequenzen, die sich voneinander unterscheiden, zu erzeugen,
wobei die beiden Laserstrahlkomponenten jeweilige Linearpolarisationsrichtungen aufweisen, die im einfallenden Strahl (F₁) senkrecht zueinander sind, und
wobei die Vorrichtung ferner ein Lambda-Viertel-Plättchen (110) umfasst, das vor dem Spiegel (101) angeordnet und für die beiden Komponenten des Laserstrahls im einfallenden Strahl und im reflektierten Strahl wirksam ist.

9. Vorrichtung nach einem der Ansprüche 6 bis 8, wobei die Laserquelleneinheit (102) geeignet ist, den Laserstrahl auf einem konstanten Strahlengang zu erzeugen, und wobei die Steuereinheit (103) geeignet ist, die Laserquelleneinheit sukzessive nach verschiedenen Betriebsmodi zu steuern, wobei
- bei einem ersten Betriebsmodus die Laserquelleneinheit zumindest eines der optischen Netze ausbildet, das geeignet ist, eine der Atomgruppen (11, 12) zu bewegen oder eine der Atomgruppen in einer feststehenden Position zu halten; und
- bei einem zweiten Betriebsmodus die Laserquelleneinheit eine Ramanquelle ausbildet, die geeignet ist, eine Folge sukzessiver Interaktionen von zwei Photonen mit den Atomen auszulösen, um eine Atomwelleninterferenz zu erzeugen.

10. Vorrichtung nach Anspruch 9, wobei die Steuereinheit (103) ferner geeignet ist, die Laserquelleneinheit (102) nach zumindest einem der folgenden zusätzlichen Betriebsmodi zu steuern:
- bei einem dritten Betriebsmodus trägt die Laserquelleneinheit dazu bei, eine magnetooptische Falle des Atomquellensystems (100) auszubilden, die geeignet ist, die Atome abzukühlen, und
- bei einem vierten Betriebsmodus erzeugt die Laserquelleneinheit einen Trennimpuls, der geeignet ist, die einzelnen Atomgruppen (11, 12) auszubilden, indem ein und derselbe vom Atomquellensystem (100) bereitgestellte Ausgangsatomcluster (10) geteilt wird.

11. Verfahren zur Messung eines Beschleunigungs- oder Graviationsgradienten, das durch Nutzung einer Vorrichtung nach einem der vorangehenden Ansprüche ausgeführt wird.

## Claims

1. Differential inertial measurement device, comprising:
- an atom source system (100), arranged to supply atoms (10) for acceleration measurements; and
- at least one atom interferometry and detection system, arranged to provide results of acceleration measurements carried out simultaneously for several separate sets of atoms (11, 12) when said sets of atoms are situated in respective measurement zones apart from one another,
each acceleration measurement result being associated with a position of the measurement zone for the set of atoms which has been used for said acceleration measurement, in order to obtain a differential inertial measurement result,
**characterized in that** the atom source system (100) is adapted for producing a cluster of atoms intended to be divided into several sets of atoms,
and **in that** the device further comprises:
- at least one atom transport system, which is arranged in order to move at least one of the sets of atoms, after division of the cluster of atoms, so that the sets of atoms are each situated in the corresponding measurement zone after an operation of the atom transport system,
so that the atoms which are used for two of the acceleration measurements carried out simultaneously in the measurement zones apart from each other originate from the same cluster of atoms, and form the two separate sets of atoms which are situated in the corresponding measurement zones.
said atom transport system being adapted for producing optical lattices each capable of trapping one of the sets of atoms (11, 12), so as to continually impose a position on said set of atoms over an operation duration of the transport system.

2. Device according to claim 1, in which one of the optical lattices is fixed in order to keep one of the sets of atoms at a fixed location, and another one of the optical lattices is mobile in order to move another one of the sets of atoms between determined initial and final positions.

3. Device according to claim 1, in which two of the optical lattices are mobile, and each arranged for moving one of the sets of atoms (11, 12) between determined initial and final positions.

4. Device according to claim 3, in which the two mobile optical lattices are adapted for each moving one of the sets of atoms (11, 12) in opposite moving directions along a common straight line.

5. Device according to any one of claims 1 to 4, comprising, for at least one of the optical lattices, two laser sources arranged so as to respectively produce two superimposed laser beams propagating in opposite directions, and a control unit adapted to vary respective radiation frequencies of the laser sources, so as to control a shift of the optical lattice.

6. Device according to any one of claims 1 to 4, comprising a laser source unit (102) and a mirror (101), arranged so that a laser beam produced by the laser source unit is reflected by the mirror in order to form an incident beam (F₁) and a reflected beam (F₂), superimposed and propagating in opposite directions, the device also comprising a control unit (103) arranged in order to vary the respective radiation frequencies of components of the laser beam, one of the components in the incident beam forming one of the optical lattices with one of the components in the reflected beam.

7. Device according to claim 6, in which the laser source unit (102) includes one of the following modulation systems:
- a radiation intensity modulator (105a); or
- an acousto-optic modulator (105b) arranged in order to receive an acoustic signal, and in order to modulate a frequency of an optical radiation passing through said modulator, as a function of the acoustic signal,
the modulation system being arranged in order to modulate the laser beam before forming said incident (F₁) and reflected (F₂) beams of the optical lattices.

8. Device according to claim 6 or 7 with claim 4, in which the laser source unit (102) is adapted for producing two components of the laser beam with respective radiation frequencies which are different,
the two laser beam components having respective directions of linear polarization which are perpendicular to one another in the incident beam (F₁) and
the device further comprising a quarter-wave plate (110) arranged in front of the mirror (101), and effective for the two components of the laser beam in the incident and reflected beams.

9. Device according to any one of claims 6 to 8, in which the laser source unit (102) is adapted for producing the laser beam over a constant beam path, and the control unit (103) is capable of successively controlling the laser source unit according to the different operating modes, in which
- for a first operating mode, the laser source unit forms at least one of the optical lattices adapted for moving one of the sets of atoms (11, 12) or keeping one of the sets of atoms in a fixed position; and
- for a second operating mode, the laser source unit forms a Raman source which is adapted for causing a sequence of successive two-photon interactions with the atoms, in order to produce an atom wave interference.

10. Device according to claim 9, in which the control unit (103) is further adapted for controlling the laser source unit (102) according to at least one of the following additional operating modes:
- for a third operating mode, the laser source unit participates in forming a magneto-optical trap of the atom source system (100), adapted for cooling the atoms, and
- for a fourth operating mode, the laser source unit produces a splitting pulse suitable for forming the separate sets of atoms (11, 12) by dividing one and the same initial cluster of atoms (10) supplied by the atom source system (100).

11. Method for measuring an acceleration or gravity gradient, implemented by using a device according to any one of the preceding claims.
